# FASCICULE DE BREVET EUROPEEN

(11) **EP 0 786 318 B1**
(45) Date de publication et mention de la délivrance du brevet: **05.04.2000**
(21) Numéro de dépôt: 97400050.7
(22) Date de dépôt: 10.01.1997
(51) Int. Cl.: B29B 15/12

(54) **Procédé et dispositif pour l'amélioration de l'imprégnation d'éléments de renfort pour matériau composite**
Verfahren und Vorrichtung zur Verbesserung der Tränkung von Verstärkungsbestandteilen für Verbundmaterialien
Method and device for improving the impregnation of reinforcing components for composite materials

(30) Priorité: 26.01.1996 FR 9601039
(43) Date de publication de la demande: 30.07.1997
(73) Titulaire: INSTITUT FRANCAIS DU PETROLE, 92852 Rueil-Malmaison Cedex (FR)
(72) Inventeur: Huvey, Michel, 78380 Bougival (FR)

(56) Documents cités:
- EP-A- 0 282 410
- GB-A- 2 012 623
- US-A- 3 273 987
- US-A- 4 904 176

## Description

La présente invention concerne un procédé et un dispositif d'imprégnation d'éléments de renfort par une substance réticulable.

Les éléments de renfort pourront être des filaments de polyamide, de polyaramide, de verre ou de carbone, disposés en nappes de fils parallèles, en tresses ou en tissus.

On connaît des dispositifs d'imprégnation dans lesquels les éléments de renforts sont plongés en continu dans un bain liquide de résine pour enrober les fils de renfort le plus complètement possible avant de fabriquer des pièces en matériau composite, par exemple par enroulement filamentaire. Cependant, une qualité acceptable de l'imprégnation n'est en général obtenue qu'après une action mécanique sur les fils, par exemple par un cheminement tortueux des fils de renfort sur des barres ou des rouleaux, ou des rouleaux presseurs. Mais ces systèmes présentent notamment les inconvénients suivants :
- encrassement du bain notamment par la rupture d'un certain nombre de filaments à cause des courbures ou compression imposées aux fils,
- détérioration mécanique des renforts à la suite des actions mécaniques précitées,
- tension excessive sur les filaments pendant leur enroulement sur un mandrin de fabrication situé en aval,
- présence de bulles d'air.

De plus, la température de l'ensemble du bain de résine doit être suffisante pour que la résine soit fluide, ce qui à terme peut faire évoluer de façon importante la nature d'une partie de la résine par le démarrage de la réaction de polymérisation.

On a tenté d'améliorer la technique d'imprégnation en continu en faisant passer les fils de renfort sur un rouleau en rotation plongé partiellement dans un bain de résine. Le rouleau entraîne dans sa rotation un film de résine dont l'épaisseur est réglée par un racleur. Ce film imprègne les fils de renfort. Dans le brevet FR-A-2612086, le rouleau est chauffé tandis que le bain est refroidi. Cependant l'imprégnation est dans certains cas imparfaite, notamment en ce qui concerne la présence de bulles d'air et également par le fait que l'enduction se fait, selon cette technique, sur un seul coté des fils, coté tambour.

Dans la suite du texte, on emploie le terme de polymérisation pour désigner les réactions chimiques conduisant à une augmentation du poids moléculaires de la substance, que ces réactions soient des réactions de polyaddition, de polycondensation ou de polymérisation vraie.

Il est connu qu'une résine réticulable peut être classée selon trois états A, B et C, en fonction du degré de polymérisation qu'elle atteint :
- l'état A correspond à une résine liquide et soluble à froid et à chaud,
- l'état B correspond à une résine solide, fusible et partiellement soluble, à la température ambiante,
- l'état C correspond à une résine solide, insoluble et infusible.

A l'état A, le taux de polymérisation des molécules est faible, ainsi que le poids moléculaire. A l'état B, le taux de polymérisation est plus important conduisant à une solidification à la température ambiante, mais il n'y a pas de encore de réticulation de réseau, ce qui rend fusible la résine. A l'état C, la réticulation existe rendant irréversible la solidification.

Cette classification est décrite dans le brevet US-A-5133995 et dans "Plastics technology" de Robert V. Milby, édité par McGraw-Hill, Inc en 1973- USA.

Le document GB-A-2 012 623 décrit une technique d'imprégnation en continu d'un élément de renfort par une substance réticulable selon laquelle l'élément est passé après imprégnation sur des rouleaux chauffés dont la température est réglée dans les moyens de chauffage définis dans la revendication 1, améliorent ainsi l'imprégnation.

La présente invention se propose d'améliorer l'imprégnation d'au moins un élément de renfort allongé par une substance réticulable.

Ce but est atteint par le procédé selon la revendication 1.

Selon la présente invention, il a été constaté que l'étape de chauffe contrôlée, pour abaisser la viscosité de la substance tout en maintenant ladite substance sensiblement à l'état A correspondant à une substance liquide à chaud et à froid de l'élément imprégné favorise l'enrobage des fils de l'élément de renfort principalement selon le principe de capillarité. Non seulement l'imprégnation est plus complète, mais elle peut être également sensiblement accélérée, ce qui facilite la mise en oeuvre de l'élément imprégné en aval du dispositif. L'installation peut être ainsi plus simple, notamment plus compacte. De plus, il a été mis en évidence que l'enrobage des fils par capillarité évacue sensiblement complètement l'air présent dans l'élément imprégné en évitant la formation de bulles. L'absence de bulles d'air dans l'élément de renfort imprégné. garanti la fabrication d'un produit en matériau composite ayant notamment une résistance à la fatigue optimale.

Dans une variante préférée, l'élément de renfort peut être imprégné de substance par le moyen d'un tambour plongé partiellement dans un bain de substance réticulable régulé en température. Le tambour peut être chauffé à une température supérieure à celle du bain.

Dans cette variante, la substance étant principalement répartie sur la face inférieure de l'élément de renfort, l'imprégnation par capillarité se fait préférentiellement dans un mouvement ascendant. Ce mouvement ascendant est avantageux, notamment pour chasser l'air.

On peut régler la durée d'exposition dudit élément imprégné sous ladite température en agissant sur l'un au moins des paramètres suivants : la vitesse de défilement de l'élément imprégné dans les moyens de chauffe et la longueur de chauffe des moyens de chauffage.

En règle générale, on a pu déterminer que plus le temps d'exposition est long, plus basse pourra être la température à laquelle doit être porté l'élément imprégné pour conduire à une imprégnation satisfaisante. Plus la température dans les moyens de chauffe peut être basse, plus il sera facile de contrôler le maintien de la substance à l'état A. Par contre, le temps d'exposition peut être trop long, vis-à-vis de la vitesse des réactions de polymérisation. De plus, une longue exposition entraîne une longueur des moyens de chauffe qui peut être difficilement réalisable. Le temps d'exposition est en effet fonction de la vitesse de défilement de l'élément imprégné et de la longueur de chauffe du dispositif.

Le procédé selon l'invention permet notamment d'optimiser les conditions opératoires pour un meilleur résultat possible compte tenu de la nature des différentes substances que l'on peut utiliser, des spécificités de leur réaction de polymérisation et des moyens de fabrication en aval.

La présente invention concerne également un dispositif d'imprégnation d'au moins un élément de renfort allongé par une substance réticulable selon la revendication 4.

Il est essentiel de ne pas faire toucher l'élément imprégné à des supports, tels barres ou rouleaux, au moins sur la distance considérée afin de ne pas essorer, salir, ou autres actions mécaniques dommageables pour la qualité de l'imprégnation.

Les moyens de chauffage peuvent comporter un tunnel dans lequel pénètre l'élément imprégné, et la longueur dudit tunnel peut être notamment déterminée en fonction de la durée d'exposition de l'élément imprégné à la température de chauffe.

Le dispositif peut comporter des moyens de fabrication par enroulement filamentaire ou par pultrusion.

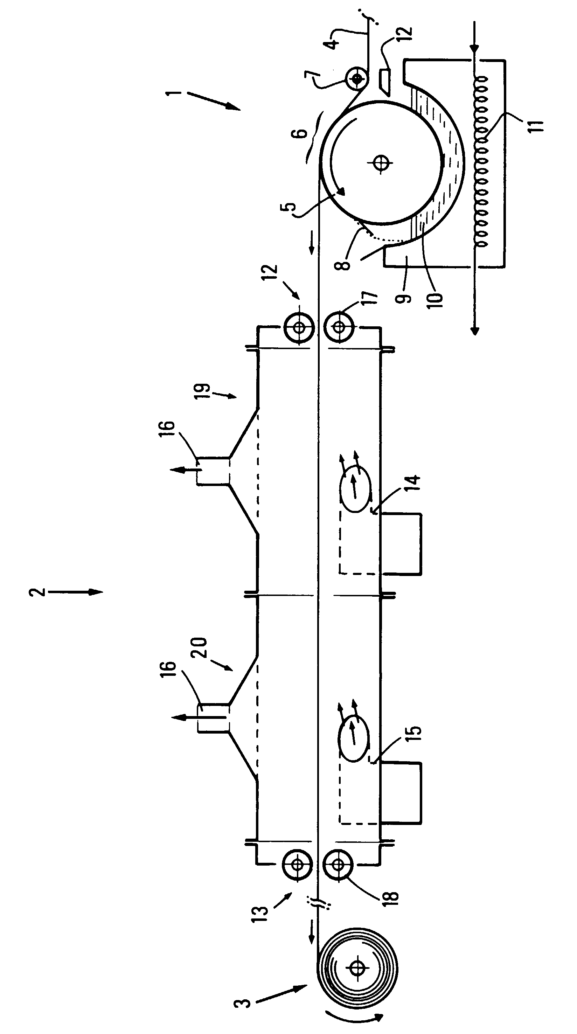

La présente invention sera mieux comprise et ses avantages apparaîtront plus nettement à la description qui suit d'un exemple de réalisation, nullement limitatif, illustré par la figure unique représentant schématiquement, en coupe, le dispositif selon l'invention,

Sur la figure, un élément de renfort 4 passe dans un moyen d'imprégnation 1, puis entre dans un moyen de chauffage 2 pour finalement être utilisé pour fabriquer un produit en matériau composite à partir des moyens de fabrication 3.

Par produit en matériau composite, il faut comprendre les divers produits fabriqués à partir ou comportant une certaine proportion d'élément de renfort noyés dans de la résine thermodurcissable. La fabrication peut se faire par exemple selon la technique d'enroulement filamentaire, de nappage ou de pultrusion. L'élément de renfort peut être sous forme d'un ou plusieurs fils, de ruban ou d'une nappe de largeur variable comportant des fils parallèles longitudinaux, obliques ou perpendiculaires. Pour l'exemple seulement, les produits peuvent être des corps creux tels des tubes, ou des profilés en fibres et résine. de forme hélicoïdale ou non.

Les profilés en fibres et résine peuvent être utilisés pour fabriquer des conduites flexibles armées, dont les armatures de résistance à la pression ou à la traction peuvent être notamment constituées par lesdits profilés. La fabrication de tels profilés est, par exemple, décrite dans le document US-4.904.176, cité ici comme référence.

On ne sortira pas du cadre de cette invention si les éléments de renfort imprégnés sont utilisés pour fabriquer des bobines de fils de renfort dits "préimprégnés", utilisés ultérieurement sur une machine de fabrication.

Les moyens d'imprégnation 1 comportent préférentiellement un tambour 5, généralement chauffé de façon que la zone de contact 6 entre le tambour 5 et l'élément de renfort 4 soit à une température contrôlée. Un support 7 guide l'élément de renfort à l'entrée. Le tambour 5 plonge partiellement dans un bain de résine 10 contenu dans un bac 9 thermostaté par des moyens 11. Par sa rotation dans le bain, le tambour est recouvert par un film continu de résine sur sa circonférence. Un dispositif 12 calibre l'épaisseur du film en amont de la zone d'imprégnation 6. Un moyen de raclage 8 récupère la résine sur la tambour en aval de la zone 6. La résine récupérée est recyclée dans le bain où sa température est abaissée.

L'élément de renfort imprégné pénètre dans un tunnel de chauffage 2 réalisé ici selon un concept modulaire rassemblant deux ensembles sensiblement identiques 19 et 20. L'un (19) comporte une entrée 12 pour les fils imprégnés, l'autre (20) une sortie 13. Des supports 17 et 18 équipent respectivement l'entrée 12 et la sortie 13, mais ces supports sont conçus pour ne pas toucher l'élément imprégné lorsque celui-ci est en déplacement, donc en légère tension. Par contre, à l'arrêt, les supports 17 et 18 soutiennent l'élément imprégné.

Chaque ensemble 19 ou 20 comporte au moins un moyen d'insufflation d'air chaud (14, 15) permettant d'élever la température de l'élément imprégné 4. L'air chaud et certaines vapeurs pouvant être dues à la résine, sont évacués par les cheminées 16. Cette conception de tunnel chauffant, nullement limitative, permet très simplement de régler et de faire varier la température sur la longueur du tunnel. Avantageusement, des sondes de mesure de température peuvent être placées le long du tunnel afin de vérifier le gradient d'élévation progressive de la température auquel est soumis l'élément imprégné. En fonction des relevés de mesures, on pourra asservir le chauffage des moyens 15, 14.

Ainsi, on peut maîtriser l'évolution de l'augmentation de température de la substance d'imprégnation sur l'élément de renfort imprégné. L'enrobage ou l'imprégnation par capillarité est très nettement amélioré à la sortie du moyen de chauffage 2. Si l'on utilise des fils ou des nappes de verre, la matière devient transparente, ce qui signifie pour l'homme du métier qu'il n'y a presque pas de formation de bulles d'air. La température et la durée d'exposition des renforts imprégnés à ladite température sont réglées de façon à ce qu'en sortie du tunnel, la substance d'imprégnation soit à l'état A, c'est-à-dire liquide à chaud comme à froid. Bien entendu, le taux de polymérisation des molécules de la résine a pu sensiblement évoluer dans le sens d'une certaine augmentation, mais tout en restant à l'état A. Cette sensible évolution du taux de polymérisation, qui peut avoir lieu selon la durée d'exposition ou le niveau de la température, est en général favorable pour l'obtention d'une bonne qualité de l'imprégné en vue de son utilisation en aval. En effet, pour une résine ayant un taux de polymérisation donné, sa viscosité µ, qui par exemple à température ambiante est µ1, sera µ2 inférieure à µ1 à une température supérieure à la température ambiante. Lorsque la résine voit son taux de polymérisation augmenté, par exemple sous l'effet d'une exposition suffisamment longue à une certaine température, sa viscosité à température ambiante sera µ3 supérieure à µ1.

Ainsi selon la présente invention, la résine de l'élément imprégné après être sorti du moyen de chauffage 2, pourra avoir une viscosité plus grande qu'à l'entrée lorsque sa température aura diminuée et sera sensiblement devenue égale à la température à l'entrée 12. Cela aura pour conséquences de limiter l'égouttage de la résine de son support, de limiter également la perte de résine sur les guides et/ou tête de dépose des moyens de fabrication situés en aval, de sensiblement supprimer l'essorage des fibres sur le mandrin de pose qui conduit à des déséquilibres de la répartition des renforts dans les produits fabriqués.

A titre d'exemple:
- les vitesses de défilement de l'élément imprégné peuvent varier entre quelques mètres et une vingtaine de mètres par minute,
- la température des éléments de chauffe dans les moyens de chauffage peut être comprise entre 100 et 630°C.

### Exemples:

Dans les exemples qui vont suivre, on utilise le même verre, la même résine et le même système d'enroulement filamentaire pour employer le fil imprégné.

La tension des fils est régulée à une valeur sensiblement de 1 daN/fil.

On prépare une composition thermodurcissable en mélangeant :
- 100 parties en poids de résine époxyde à base de diglycidyléther de bisphénol A (Epikote 828 de Shell",
- 90 parties en poids d'anhydride méthylnadique (NMA d'Allied Chemical),
- 2 parties en poids de benzyl diméthylamine.

Le mélange est effectué au moyen d'une hélice immergée tournant à faible vitesse pour éviter d'emprisonner de l'air. Après mélange, la résine se présente comme un liquide ambré, transparent, de viscosité moyenne.

Sur un cantre, on dispose de bobines de fil de verre de 2400 Tex (verre ECR d'Owens Corning Fiberglass).

On dispose également d'une machine d'enroulement filamentaire équipée d'un mandrin et d'une étuve pour cuire les produits obtenus.

1) Ce premier exemple correspond à l'art antérieur selon l'enseignement du document FR-A-2612086. Il s'agit de l'utilisation du système d'enduction référencé 1 sur la figure unique. Le rouleau 5 est parcouru par une circulation d'huile thermostatée à 80°C. La raclette 8 disposée en aval recycle dans la masse froide de résine 10 la résine non prise par les fils 4 sur le rouleau 5. La barre de calibrage 12 est disposée en amont de la zone de dépôt 6 pour limiter l'épaisseur de résine sur le rouleau.

Avec une vitesse de 0,3 à 0,5 m/minute, les fils de verre quittent le rouleau bien imprégnés, transparents, pratiquement sans inclusion d'air. Au bout de plusieurs heures de fabrication, la résine dans le bac 9 est toujours claire et limpide. Lorsqu'elle paraît visqueuse dans les zones plus froides, il suffit de couper le refroidissement 11 du bac pendant quelques minutes pour que le mélange devienne à nouveau homogène en température et que les zones froides reprennent une viscosité normale.

Les tubes fabriqués sur une machine d'enroulement filamentaire 3 sont jaunes clairs, transparents. De rares bulles d'air, minces et de faible longueur, sont clairement visibles. Un examen micrographique montre que les fibres de verre sont mouillées sur toute leur surface par de la résine, qu'il n'y a pas de défaut d'interface et que les rares bulles d'air ne présentent que des interfaces air-résine, mais pas d'interface air-verre.

La fabrication peut être poursuivie ainsi pour de nombreux tubes sans vidanger le bac 10.

Avec une vitesse supérieure à 0,5 m/minute, les fils quittent le rouleau avec un aspect blanc sur le dessus, montrant que le verre n'a pas été imprégné sur la totalité de l'épaisseur du roving. La quantité nécessaire de résine a pourtant été entraînée et est présente sous le roving. Il faut environ cinq minutes pour que la résine remonte par capillarité entre les filaments du roving pour fournir une mèche imprégné transparente. Avec une distance de cinq mètres entre le tambour chaud et un premier support en aval, il est possible de travailler jusqu'à une vitesse de 1 m/minute.

Pour des vitesses supérieures, avec des tensions faibles, il n'est pas possible d'allonger indéfiniment la distance entre le tambour chaud et le premier support de fil (anneau ou roulette). Aussi dans ces conditions, une partie de la résine présente sous le fil et n'ayant pas encore pénétré par capillarité risque d'être essorée ou entraînée lors d'un passage sur un support. Lorsque des fils présentant un aspect blanc sur le dessus arrivent au point de bobinage, il apparaît dans le tube fabriqué des zones blanchâtres, qui, en micrographie, montrent des interfaces verre-air et de très nombreuses microbulles. La vitesse utilisable pour obtenir des produits exempts de microbulles est donc limitée.

Il faut rappeler que la présence ou l'absence d'air au niveau des fibres de renfort en verre est un critère connu pour apprécier la qualité mécanique du produit fabriqué. Plus le produit est transparent, moins il y a de bulles d'air.

2) Le dispositif d'enduction est le même que celui décrit précédemment, mais selon la présente invention, un tunnel chauffant 2 a été interposé sur la ligne de fils. le tunnel a été décrit précédemment. La fourniture d'air chaud par les soufflettes 14 et 15 est d'environ 500 litres/minute d'air à une température régulée des éléments de chauffe entre 100 et 630°C. Le tunnel mesure environ 2 mètres de longueur. La zone à l'air libre après le tunnel est d'environ 3 mètres.

Avec les soufflettes réglées à 250°C, et une vitesse de défilement des fils de 3 m/minute, le produit fabriqué présente les mêmes caractéristiques que dans l'exemple précédent, lorsque la vitesse de défilement était de 0,3 m/minute.

3) Avec la même installation que dans l'exemple 2, les soufflettes réglées à 400°C, et une vitesse de défilement des fils de 6 m/minute, les fils sortent du tunnel transparents, bien imprégnés, mais il y a un égouttage de résine au niveau du premier support, et la teneur en verre du tube fabriqué, qui était de 53 % en volume (70 % en poids) dans tous les cas précédents, monte à 80 % en poids. Le tube n'est plus transparent, mais seulement translucide. Des examens micrographiques montrent que les fils de verre ne sont plus séparés par un matelas épais de résine, comme dans le cas précédent mais que les fibres sont presque au contact les unes des autres en certains points.

4) Dans les mêmes conditions que dans l'exemple 3, on repousse le dispositif d'imprégnation et le tunnel chaud 2 qui lui fait suite à environ 10 mètres de distance du premier support. Les fils prennent la forme d'une chaînette due à leur poids. La flèche de la chaînette est importante mais tolérable (50 cm environ) et la qualité des produits ainsi fabriqués devient semblable à celle de l'exemple 2.

## Revendications

1. Procédé d'imprégnation d'au moins un élément de renfort allongé par une substance réticulable, selon lequel :
- on fait passer ledit élément, après imprégnation dans des moyens d'imprégnation, dans des moyens de chauffage pour élever la température au moins de la substance d'imprégnation, lesdits moyens de chauffage ne comportant aucun moyen de support en contact avec l'élément imprégné sur la distance entre la zone d'imprégnation des moyens d'imprégnation et le voisinage de la sortie des moyens de chauffage, lorsque l'élément imprégné est en déplacement;
- on règle le niveau d'élévation de la température et la durée d'exposition dudit élément imprégné à ladite température pour abaisser la viscosité de la substance tout en maintenant ladite substance sensiblement à l'état A correspondant à une substance liquide à chaud et à froid.

2. Procédé selon la revendication 1, caractérisé en ce que ledit élément de renfort est imprégné de substance par le moyen d'un tambour plongé partiellement dans un bain de substance réticulable régulé en température.

3. Procédé selon l'une des revendications 1 ou 2, caractérisé en ce que l'on règle la durée d'exposition dudit élément imprégné sous ladite température en agissant sur l'un au moins des paramètres suivants : la vitesse de défilement de l'élément imprégné et la longueur de chauffe des moyens de chauffage.

4. Dispositif d'imprégnation d'au moins un élément de renfort allongé par une substance réticulable comportant des moyens d'imprégnation, des moyens de chauffage adaptés à élever la température au moins de la substance d'imprégnation de l'élément imprégné, et des moyens de réglage de la température et de la durée d'exposition dudit élément imprégné à ladite température, lesdits moyens de chauffage ne comportant aucun moyen de support en contact avec l'élément imprégné sur la distance entre la zone d'imprégnation des moyens d'imprégnation et le voisinage de la sortie des moyens de chauffage, lorsque l'élément imprégné est en déplacement.

5. Dispositif selon la revendication 4, caractérisé en ce que lesdits moyens de chauffage comportent un tunnel dans lequel pénètre l'élément imprégné, et en ce que la longueur dudit tunnel est notamment déterminée en fonction de la durée d'exposition de l'élément imprégné à la température de chauffe.

6. Dispositif selon l'une des revendications 4 à 5, caractérisé en ce qu'il comporte des moyens de fabrication par enroulement filamentaire.

7. Application du procédé selon l'une des revendications 1 à 3, pour fabriquer des profilés destinés à la fabrication d'armures de renfort de conduites flexibles armées.

8. Utilisation du dispositif selon l'une des revendications 4 à 6 pour fabriquer des profilés destinés à la fabrication d'armures de renfort de conduites flexibles armées.

## Patentansprüche

1. Verfahren zur Imprägnierung wenigstens eines länglichen Verstärkungselementes mit einer vernetzbaren Substanz, bei dem man:
- dieses Element nach Imprägnierung in Imprägnierungsmitteln in Heizmitteln durchlaufen läßt, um die Temperatur wenigstens der Imprägnierungssubstanz zu erhöhen, wobei diese Heizmittel kein Trägermittel in Kontakt mit dem imprägnierten Element über die Distanz zwischen der Imprägnierungszone der Imprägnierungsmittel und der Nachbarschaft des Austritts der Heizmittel umfassen, wenn das imprägnierte Element sich in Bewegung befindet;
- das Temperaturerhöhungsniveau und das Niveau der Dauer, während der dieses imprägnierte Element dieser Temperatur ausgesetzt wird, einstellt, um die Viskosität der Substanz abzusenken, indem man diese Substanz im wesentlichen in dem Zustand A entsprechend einer in der Wärme und in der Kälte flüssigen Substanz absenkt.

2. Verfahren nach Anspruch 1, dadurch gekennzeichnet, daß dieses Verstärkungselement mit Substanz durch eine Trommel imprägniert wird, die man partiell in ein Bad vernetzbarer Substanz taucht, welche temperaturgeregelt ist.

3. Verfahren nach einem der Ansprüche 1 oder 2, dadurch gekennzeichnet, daß man die Dauer, während der dieses imprägnierte Element dieser Temperatur ausgesetzt wird, einstellt, indem man auf wenigstens einen der folgenden Parameter einwirkt: Durchlaufgeschwindigkeit des imprägnierten Elementes und Heizlänge der Heizmittel.

4. Vorrichtung zur Imprägnierung wenigstens eines länglichen Verstärkungselementes mit einer vernetzbaren Substanz, umfassend: Imprägnierungsmittel, Heizmittel, die so ausgelegt sind, daß sie die Temperatur wenigstens der Imprägnierungssubstanz des imprägnierten Elementes erhöhen, und Einstellmittel für die Temperatur und die Dauer, während der dieses imprägnierte Element dieser Temperatur ausgesetzt wird, wobei diese Heizmittel kein Trägermittel in Kontakt mit dem imprägnierten Element über die Distanz zwischen der Imprägnierungszone der Imprägnierungsmittel und der Nachbarschaft des Austritts der Heizmittel, wenn das imprägnierte Element sich in Bewegung befindet, umfassen.

5. Vorrichtung nach Anspruch 4, dadurch gekennzeichnet, daß diese Heizmittel einen Tunnel umfassen, in den das imprägnierte Element eintritt, und daß die Länge dieses Tunnels insbesondere als Funktion der Dauer bestimmt wird, über die das imprägnierte Element dieser Heiztemperatur ausgesetzt wird.

6. Vorrichtung nach einem der Ansprüche 4 bis 5, dadurch gekennzeichnet, daß sie Mittel zur Herstellung durch Filamentwickeln umfaßt.

7. Anwendung des Verfahrens nach einem der Ansprüche 1 bis 3 zur Herstellung der Profile, die zur Fabrikation von Verstärkungsbewehrungen armierter flexibler Leitungen bestimmt sind.

8. Verwendung der Vorrichtung nach einem der Ansprüche 4 bis 6 zur Herstellung der Profile, die zur Herstellung von Verstärkungsbewehrungen von armierten flexiblen Leitungen bestimmt sind.

## Claims

1. Process for impregnation of at least one elongated reinforcing element by a cross-linkable substance, according to which:
- said element is passed, after impregnation in impregnating means, into heating means to raise the temperature at least of the impregnating substance, said heating means comprising no means of support in contact with the impregnated element over the distance between the zone of impregnation of the impregnating means and the vicinity of the outlet of the heating means, when the impregnated element is moving;
- the level of raising of the temperature and the time of exposure of said impregnated element to said temperature are adjusted to lower the viscosity of the substance while maintaining said substance substantially in the state A corresponding to a substance which is liquid when hot and cold.

2. Process according to claim 1, characterised in that said reinforcing element is impregnated by substance through the means of a drum partially immersed in a bath of cross-linkable substance the temperature of which is regulated.

3. Process according to one of claims 1 or 2, characterised in that the time of exposure of said impregnated element to said temperature is adjusted by acting on one at least of the following parameters: the speed of movement of the impregnated element and the length of heating of the heating means.

4. Device for impregnation of at least one elongated reinforcing element by a cross-linkable substance, comprising impregnating means, heating means adapted to raise the temperature at least of the impregnating substance of the impregnated element, and means for adjusting the temperature and the time of exposure of said impregnated element to said temperature, said heating means comprising no means of support in contact with the impregnated element over the distance between the zone of impregnation of the impregnating means and the vicinity of the outlet of the heating means, when the impregnated element is moving.

5. Device according to claim 4, characterised in that said heating means comprise a tunnel into which the impregnated element passes, and in that the length of said tunnel is determined in particular as a function of the time of exposure of the impregnated element to the heating temperature.

6. Device according to one of claims 4 to 5, characterised in that it comprises means of manufacture by filamentary winding.

7. Application of the process according to one of claims 1 to 3 for the manufacture of profiles intended for the manufacture of reinforcements for reinforced flexible tubes.

8. Use of the device according to one of claims 4 to 6 for the manufacture of profiles intended for the manufacture of reinforcements for reinforced flexible tubes.
